# EUROPÄISCHE PATENTANMELDUNG

(11) **EP 2 708 304 A2**
(43) Veröffentlichungstag der Anmeldung: **19.03.2014**
(21) Anmeldenummer: 13184023.3
(22) Anmeldetag: 12.09.2013
(51) Int. Cl.: B23K 20/08, B23K 20/00

(54) **Generatives Kaltschweißverfahren und generative Kaltschweißvorrichtung**

(30) Priorität: 14.09.2012 DE 102012018286
(71) Anmelder: Wagner, Edelbert, 71069 Sindelfingen (DE)
(72) Erfinder: Wagner, Edelbert, 71069 Sindelfingen (DE)
(74) Vertreter: Mammel und Maser

(57) **Zusammenfassung**

Die vorliegende Erfindung stellt ein Kaltschweißverfahren zum Verbinden metallischer Schweißpartner bereit, das die Schritte Bereitstellen von Metallpartikeln (1) als erste Schweißpartner durch eine Partikelzuführeinheit (11) und Beschleunigen der Metallpartikel (1) auf eine Geschwindigkeit von zumindest 100 m/s durch eine Partikelbeschleunigungseinheit (12) umfasst. Weitere Schritte sind das Ausrichten jedes der beschleunigten Metallpartikel (1) durch eine Partikelpositioniereinheit (13) auf eine Schweißstelle an zumindest einem Metallsubstrat (1',5,5'), das einen zweiten Schweißpartner bildet, und das auftreffen Lassen der auf zumindest 100 m/s beschleunigten Metallpartikel (1) auf der Schweißstelle an dem Metallsubstrat (1',5,5'), dabei Zusammenbringen der Oberflächenatome der Metallpartikel (1) und der Oberflächenatome des Metallsubstrats (1',5,5') auf Atomabstand und unter Bilden einer metallischen Bindung Verbinden des an der Schweißstelle aufgetroffenen Metallpartikels (1') mit dem Metallsubstrat (1',5,5'). Dieses Kaltschweißverfahren wird verwendet zum generativen Herstellen einer zumindest einen Hohlraum aufweisenden Metallstruktur (4), wobei erste auf eine Abformgrundlage aufgetroffene Metallpartikel (1') das Metallsubstrat (1') für die nachfolgend auftreffenden Metallpartikel (1) bilden. Ferner offenbart die Erfindung eine zur Durchführung eines Kaltschweißverfahrens geeignete Kaltschweißvorrichtung (10).

## Beschreibung

Die Erfindung betrifft ein generatives Verfahren und eine generative Vorrichtung zum Kaltschweißen.

Beim Schweißen werden Werkstücke unter Anwendung von Wärme oder Druck, mit oder ohne Zusatzwerkstoff unlösbar verbunden. Eine Schweißverbindung entsteht dabei durch den Aufbau einer metallischen Bindung zwischen den Oberflächenatomen der Schweißpartner, wofür ein ausreichend kleiner Abstand (Atomabstand) zwischen den Oberflächenatomen der Schweißpartner erforderlich ist.

Die meisten Schweißverfahren verwenden deshalb die schmelzflüssige Phase, um einen ausreichend kleinen atomaren Abstand zu erzielen. Bei diesen Schmelzschweißverfahren (z. B. WIG-, MIG-, MAG-Schweißen, etc.) werden die zu verbindenden Werkstoffe bis zur Verflüssigung erhitzt, so dass sie sich vermischen und nach dem Erkalten fest miteinander verbunden sind. Beim Schmelzschweißen wird die Schweißverbindung, je nach Verfahren, in einer Schweißnaht oder einem Schweißpunkt, durch einen lokal begrenzten Schmelzfluss ohne Anwendung von Kraft mit oder ohne Zusatzwerkstoff erzeugt.

Die Schmelzschweißverfahren werden sowohl beim Verbindungsschweißen, dem Zusammenfügen von Werkstücken, beispielsweise mit einer Längsnaht, als auch beim Auftragschweißen eingesetzt, wobei es sich um das Beschichten eines Werkstückes durch Schweißen handelt. Beispiele zum Verbindungsschweißen finden sich in DE 102008003616 A1 und DE 19747383 A1; Beispiele zum Auftragsschweißen in DE 69016433 T2, DE 102010052555 A1, DE 102010005375 A1, DE 102006032110 A1 und DE 102006010520 A1.

Eine flächige Schweißverbindung kann durch Reibschweißen oder Rührreibschweißen erzeugt werden, wobei die Schweißpartner relativ zueinander bewegt werden und sich an den Schweißflächen berühren, so dass das Material dort durch die entstehende Reibung erwärmt und plastifiziert wird. Das an der Kontaktfläche plastifizierte Material führt nach Beendigung des Reibvorganges zur Verbindung der Schweißpartner unter Bildung von atomaren Bindungen.

Die aktuell eingesetzten Schmelzschweißverfahren verursachen allerdings durch die partiell eingebrachte Schmelzwärme beim Abkühlen Spannungen im Werkstückverbund und infolge der Wärmespannungen Geometrieveränderungen im erkalteten Zustand. Ferner kommt es bei Legierungen durch den partiellen Wärmeeinfluss zu Veränderungen im Gefüge. Häufig können nur gleichartige Metalle verschweißt werden. Ähnliche Effekte treten auch bei thermischen Spritzverfahren auf wie sie z.B. in der WO 200194030 A1 offenbart sind.

Schockschweißverfahren wie das Sprengschweißen und die Elektromagnetische Impulstechnologie (EMPT) erreichen den ausreichend kleinen Abstand zwischen den Atomen ohne Erwärmung durch mechanischen Druck.

Das Wirkprinzip der mechanischen Schockschweißverfahren, dem Sprengschweißen und der Elektromagnetische Pulstechnologie wird von E. Uhlmann, K. Damavandi, A. Rautenstrauch, Institut für Werkzeugmaschinen und Fabrikbetrieb, TU Berlin, in "Hochdynamischer Aufprallvorgang beim Magnetimpulsschweißen" (GKSS 2006/15, ISSN 0344-9629, Geesthachter Schweißtage '06 - Festphase-Fügeverfahren, S. 23 - 33) beschrieben. Dabei wird eines der Werkstücke stark beschleunigt, so dass bei seinem Aufprall auf dem Schweißpartner die Oberflächenatome beider Werkstücke auf Atomabstand zusammengepresst werden und eine metallische Bindung eingehen. So werden die Werkstücke ohne äußere Wärmezufuhr an den Stoßflächen stoffschlüssig miteinander verbunden. Bei der Kollision der Schweißpartner unter einem bestimmten Kollisionswinkel entstehen typische Oberflächendeformationen in der Schweißzone, die zum Aufreißen von Oxidschichten und zu thermisch aktivierten Diffusionsvorgängen führen. Der dabei durch die Verdrängung der Luft im Fügespalt entstehende und als "Jet" bezeichnete Strom trägt die von der Oberfläche abplatzenden Oxid- und Schmutzpartikel aus der Schweißzone. Die beim Schockschweißen entstehen typische Oberflächendeformationen in der Schweißzone bilden eine charakteristische, wellenförmige Grenzlinie aus, die eine erfolgte Verschweißung kennzeichnet.

Die zum Schockschweißen erforderlichen Geschwindigkeiten des beschleunigten Werkstücks liegen bei weit über 100 m/s, in Abhängigkeit des zu schweißenden Werkstoffes auch oberhalb von 300 m/s. Die zur Beschleunigung des Werkstücks erforderlichen Energiedichten werden durch Sprengstoff oder Impulsmagnetfelder bereitgestellt.

Vorteilhaft entstehen bei Schockschweißverfahren keine Spannungen im Werkstückverbund, da keine Erwärmung erfolgt. Da keine Wärmespannungen auftreten, führt der Schweißprozess auch nicht zu Geometrieveränderungen am Werkstück. Es können verschiedene Metalle verschweißt werden und bei Legierungen treten keine Gefügeveränderungen auf.

Allerdings ist der Einsatz dieser Schockschweißverfahren derzeit auf Spezialanwendungen an speziellen Bauteilgeometrien wie Dünnblechen und Hohlprofilen (z. B. Rohre) beschränkt.

Während ferner das Sprengschweißen Nachteile im Bereich des Handlings, der Automatisierbarkeit, der Kosten und der Reproduzierbarkeit aufweist, wird das impulsmagnetische Schweißen durch den Bedarf an der in kinetische Energie umzuwandelnden durch das Impulsmagnetfeld eingeleiteten Energie beschränkt. Der Energiebedarf wächst mit größeren Durchmessern und Wandstärken des zu beschleunigenden Werkstücks im Verhältnis zur Volumenänderung an und hängt von der Dichte des zu beschleunigenden Werkstücks ab.

Die Haupteinsatzgebiete der thermischen Schweißverfahren liegen in den Bereichen Nahtschweißen und Auftragsschweißen.

Ausgehend von diesem Stand der Technik ist es Aufgabe der vorliegenden Erfindung, ein Kaltschweißverfahren zu entwickeln, das alternativ zu thermischen Schweißverfahren wie insbesondere Verbindungs- bzw. Nahtschweißen und Auftragsschweißen einsetzbar ist, und eine spannungsfreie Schweißverbindung ohne Geometrieveränderungen der Schweißpartner ausbildet.

Diese Aufgabe wird durch ein Verfahren mit den Merkmalen des Anspruchs 1 gelöst.

Eine weitere Aufgabe liegt in der Schaffung einer Schweißvorrichtung zur Durchführung des Kaltschweißverfahrens.

Diese Aufgabe wird durch eine Kaltschweißvorrichtung mit den Merkmalen des Anspruchs 5 gelöst.

Weiterbildungen des Verfahrens und der Vorrichtung sind in den jeweiligen Unteransprüchen ausgeführt.

Das erfindungsgemäße Kaltschweißverfahren zum Verbinden von metallischen Schweißpartnern umfasst das Bereitstellen von Metallpartikeln als erste Schweißpartner durch eine Partikelzuführeinheit und das Beschleunigen der Metallpartikel auf eine Geschwindigkeit von zumindest 100 m/s durch eine Partikelbeschleunigungseinheit. Die beschleunigten Metallpartikel werden durch eine Partikelpositioniereinheit auf eine Schweißstelle an einem Metallsubstrat gerichtet, das einen zweiten Schweißpartner bildet. Eine Schweißstelle kann auch eine Fügestelle zwischen zwei oder mehreren Metallsubstraten sein. Die auf zumindest 100 m/s beschleunigten Metallpartikel treffen auf der Schweißstelle an dem Metallsubstrat auf, so dass bei der Kollision die Metallpartikel und das Metallsubstrat an den Kontaktflächen plastisch deformiert werden, wobei die Oberflächenatome der Metallpartikel und die Oberflächenatome des Metallsubstrats auf Atomabstand quasi "zusammengepresst" werden, so dass jeder an der Schweißstelle aufgetroffene Metallpartikel unter Ausbilden einer metallischen Bindung mit dem Metallsubstrat verbunden wird. Die im Verhältnis zum Volumen der Metallpartikel große Anzahl an Oberflächenatomen an der Kontaktfläche unterstützt den Aufbau der Metallbindung an das Metallsubstrat. Das Kaltschweißverfahren wird verwendet zum generativen Herstellen einer zumindest einen Hohlraum aufweisenden Metallstruktur,
wobei erste auf eine Abformgrundlage aufgetroffene Metallpartikel (1') das Metallsubstrat (1') für die nachfolgend auftreffenden Metallpartikel (1) bilden.

Falls die Abformgrundlage einen Sockel der Metallstruktur bildet, kann ein Metallsubstrat verwendet werden, so dass die ersten Metallpartikel mit der Abformgrundlage verschweißen. Andernfalls kann als Abformgrundlage ein Substrat gewählt werden, mit dem die Metallpartikel nicht verschweißen, so dass sich die fertige Metallstruktur von der Abformgrundlage lösen lässt. Durch die sukzessive auftreffenden Metallpartikel, die jeweils mit zuvor aufgetroffenen Metallpartikeln kalt verschweißt werden, kann ein Bauteil schichtweise aufgebaut werden. Solche generativen Verfahren werden zu den Rapid Technologien (Rapid Prototyping, Rapid Manufacturing, Rapid Tooling, etc.) gezählt, die zunehmend Einsatz im Leichtbau finden, da sich so beanspruchungsgerechte Materialstrukturen mit einer Vielzahl von Hohlräumen erstellen lassen, die ein optimales Verhältnis von Masse zu Festigkeit aufweisen. Durch die mit dem erfindungsgemäßen Kaltschweißverfahren ermöglichten sehr hohen Schweißgeschwindigkeiten kann eine wesentliche Reduzierung der Fertigungszeiten beim Rapid Prototyping oder Rapid Manufacturing erreicht werden. Bei der generativen Herstellung von Metallstrukturen, auch 3 D-Metallplotten genannt, kann mit dem Kaltschweißverfahren eine wesentliche Erhöhung der Genauigkeit gegenüber herkömmlichen Techniken, wie dem Lasersintern erreicht werden.

Da die kalte Schweißverbindung ohne schmelzflüssige Phase und ohne den entsprechenden Wärmeeintrag erzeugt wird, weist sie keine Spannungen im Fügeverbund auf. So ist es möglich, Bauteile aus gleichen und verschiedenen Metallen spannungsfrei und damit äußerst maßhaltig miteinander zu verschweißen. Das erfindungsgemäße Partikelkaltschweißverfahren eignet sich sowohl zum Verbindungsschweißen als auch zum Auftragsschweißen. Da es sich um ein Kaltschweißverfahren ohne Wärmeeintrag handelt, können so auch hochlegierte Metalle miteinander verschweißt werden, ohne dass Gefügeveränderungen auftreten.

Um die Metallpartikel exakt ausrichten zu können, werden sie zuvor bei der Bereitstellung durch die Partikelzuführeinheit vereinzelt und sukzessive der Partikelbeschleunigungseinheit zugeführt.

In einer Ausführungsform kann das Vereinzeln durch Formen, bevorzugt durch Kaltformen, und Trennen eines Metalldrahts während dessen Zufuhr erfolgen, wobei die Partikelgröße der gebildeten Metallpartikel in zumindest einer Abmessung einer Stärke des Metalldrahts entspricht.

Sowohl das Beschleunigen der Metallpartikel durch die Partikelbeschleunigungseinheit als auch das Ausrichten jedes der beschleunigten Metallpartikel auf die Schweißstelle durch die Partikelpositioniereinheit kann jeweils induktiv, kapazitiv oder mechanisch erfolgen.

Das Kaltschweißverfahren bzw. das Schweißergebnis kann durch Einstellen von Schweißparametern gesteuert werden. Darunter fällt beispielsweise das Einstellen eines Aufprallwinkels α der Metallpartikel an der Schweißstelle, so dass der Winkel in einem Bereich von 1° bis 40°, bevorzugt von 3° bis 30°, bezogen auf den Normalenvektor des Metallsubstrats, liegt.

Zusätzlich oder alternativ kann die Geschwindigkeit, auf die die Metallpartikel beschleunigt wird, variiert werden; so können die Metallpartikel, abhängig auch von dem verwendeten Material, der Form und Größe der Partikel und der Schweißaufgabe, auch auf zumindest 200 oder 300 m/s beschleunigt werden. So ist das Verhältnis von Partikelmasse zu Partikelaufpralloberfläche ein Schweißparameter, der Einfluss auf das Schweißergebnis hat. Als Partikelgeometrie kommt eine Vielzahl regelmäßiger und unregelmäßiger Formen in Frage. Regelmäßige Formen umfassen Kugeln, Ellipsoide, Zylinder und Quader, unregelmäßige Partikel liegen als Pulver oder Granulat mit unterschiedlich geformten Partikeln vor. Einsetzbare Partikelgrößen liegen in einem Bereich von 0,1 bis 5 mm, bevorzugt 0,5 bis 3 mm. Wobei die Wahl der Partikelgröße nur dem Aspekt der zu erzeugenden Auftragsleistung unterliegt. Ebenso ist die Verwendung von Nanopartikeln (Partikelgröße 1-100 nm) möglich. Durch die hohe Reaktivität solcher Teilchen kann die notwendige Aufprallgeschwindigkeit wesentlich reduziert, und ein hochfestes Gefüge erzeugt werden. Hierbei ist die Teilchengröße so zu wählen, dass die Neigung zur Eigenverschweißung erst durch die Aufprallenergie aktiviert wird. Die Entscheidung welche Teilchengröße zum Einsatz kommt unterliegt wirtschaftlichen Kriterien. Dabei wirken die Faktoren Kosten zur Teilchenherstellung, notwendiger Energieeinsatz und technischer Aufwand zur Teilchenzufuhr sowie die erzielbare Auftragsleistung,

Die Partikelzuführeinheit kann bevorzugt mit einer Partikelzuführfrequenz von zumindest 80 Partikel/s, bevorzugt zumindest 100 Partikel/s eingestellt werden, womit sehr hohe Schweißgeschwindigkeiten, ähnlich den beim Laserstrahlschweißen, erreicht werden.

Eine weitere Einstellung der Schweißparameter betrifft das optionale Vorwärmen der Metallpartikel und/oder des Metallsubstrats.

Ferner kann das erfindungsgemäße Kaltschweißverfahren unter Vakuum stattfinden, wodurch vorteilhaft die beschleunigten Metallpartikel nicht der Luftreibung ausgesetzt und damit nicht abgebremst werden.

Eine Kaltschweißvorrichtung, die dazu geeignet ist, das erfindungsgemäße Kaltschweißverfahren durchzuführen, weist eine Partikelzuführeinheit auf, der eine Partikelbeschleunigungseinheit nachgeordnet ist, die die von der Partikelzuführeinheit zugeführten Metallpartikel auf die vorbestimmte Aufprallgeschwindigkeit von zumindest 100 m/s beschleunigt. Der Partikelbeschleunigungseinheit ist eine Partikelpositioniereinheit nachgeordnet, die auf eine Schweißstelle an zumindest einem Metallsubstrat ausgerichtet werden kann. Ferner umfasst die Kaltschweißvorrichtung eine Haltevorrichtung für das Metallsubstrat oder entsprechend für mehrere Metallsubstrate.
Um die geordnete, vereinzelte sukzessive Zufuhr der Metallpartikel zu der Beschleunigungseinheit zu ermöglichen, weist die Partikelzuführeinheit der Kaltschweißvorrichtung erfindungsgemäß eine Form- und Vereinzelungseinrichtung auf, die zum Formen und Vereinzeln eines Metalldrahts zu den Metallpartikeln ausgebildet ist.

Ist die Durchführung des Kaltschweißverfahrens unter Vakuum vorgesehen, so weist die Kaltschweißvorrichtung eine Vakuumkabine auf, in der die Partikelzuführeinheit, die Partikelbeschleunigungseinheit, die Partikelpositioniereinheit und die Haltevorrichtung angeordnet sind. Um den Schweißprozess zu steuern, sind eine oder mehrere Steuerelektroniken der Kaltschweißvorrichtung mit der Partikelzuführeinheit und/oder der Partikelbeschleunigungseinheit und/oder der Partikelpositioniereinheit gekoppelt.

In bevorzugter Ausführung kann die Partikelzuführeinheit der Kaltschweißvorrichtung eine Form- und Vereinzelungseinrichtung aufweisen, die zum Formen und Vereinzeln eines Metalldrahts zu den Metallpartikeln derart ausgebildet ist, dass. ein Walzenpaar oder auch mehrere Walzenpaare eine Vorschubeinrichtung für den Metalldraht bilden, wobei profilierte Mantelflächen der Walzen gleichzeitig die Formeinrichtung bilden, mit der der Metalldraht in Partikelform gebracht wird. Ein diesem Walzenpaar nachgeordnetes, koordiniert dazu rotierendes zweites Walzenpaar, das ebenfalls mit profilierten Mantelflächen versehen ist, kann die Vereinzelungseinrichtung bereitstellen, die die im Metalldraht geformten Partikel abtrennt und vereinzelt der Beschleunigungseinheit zuführt. Vorteile dieser Ausführungsform liegen in der einfachen Technik und dem preiswerten Rohmaterial. Die Schritte des Trennens bzw. Vereinzeln und Zuführens werden durch entsprechende Vorrichtungen ausgeführt, die in eine Vereinzelungseinrichtung integriert vorliegen. Allerdings lassen sich hierbei nur einfache Partikelqualitäten beispielsweise vorwiegend kugeliger Form erzeugen. Die erhältliche Partikelform hängt von der Drahtform und vom Mantelprofil der Walzen ab. Die Walzenpaare der Partikelzuführeinheit können ausgetauscht werden, etwa um andere Partikelformen oder -größen zu erhalten oder um verschlissene Teile zu ersetzen.

Die Partikelbeschleunigungseinheit, die die vereinzelten Metallpartikel auf die erforderliche Geschwindigkeit von zumindest 100 m/s bringt, kann beispielsweise durch einen Hochfrequenz-Induktionspulsbeschleuniger realisiert werden, ebenso ist eine Beschleunigungseinheit nach dem Prinzip eines Linearmotors möglich. Alternativ dazu kann eine Kondensatorkaskade aus mehreren hintereinander geschalteten Kondensatoren eingesetzt werden. Aber auch die Verwendung einer mechanischen Partikelbeschleunigungseinheit wie eines Rotationsbeschleunigers ist möglich.

Auch die Partikelpositioniereinheit kann induktiv, kapazitiv oder mechanisch ausgeführt sein. Sie kann beispielsweise durch eine oder, je nach Ablenkungsgrad, mehrere, hintereinander geschaltete Ablenkspulen realisiert werden; es kann aber auch ein Ablenkkondensator bzw. es können mehrere Ablenkkondensatoren eingesetzt werden. Ein Beispiel für eine mechanische Partikelpositioniereinheit ist eine in zwei Achsen quer zur Partikelbewegung bewegliche Ablenkhülse. Die Beweglichkeit der Hülse kann etwa durch ein Kardangelenk bewerkstelligt werden.

Diese und weitere Vorteile werden durch die nachfolgende Beschreibung unter Bezug auf die begleitenden Figuren dargelegt. Der Bezug auf die Figuren in der Beschreibung dient dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
1. eine erfindungsgemäße Partikelkaltschweißvorrichtung, geeignet zum 3D-Plotten, Nahtschweißen und Auftragsschweißen,
2. eine Seitenteilschnittansicht einer Partikelzuführeinheit einer erfindungsgemäßen Partikelkaltschweißvorrichtung,
3. eine Seitenteilschnittansicht einer alternativen Partikelzuführeinheit einer erfindungsgemäßen Partikelkaltschweißvorrichtung,
4. eine Seitenteilschnittansicht einer Partikelbeschleunigungseinheit einer erfindungsgemäßen Partikelkaltschweißvorrichtung,
5. eine Seitenteilschnittansicht einer alternativen Partikelbeschleunigungseinheit einer erfindungsgemäßen Partikelkaltschweißvorrichtung,
6. eine Seitenteilschnittansicht einer weiteren alternativen Partikelbeschleunigungseinheit einer erfindungsgemäßen Partikelkaltschweißvorrichtung,
7. eine Seitenteilschnittansicht einer Partikelpositioniereinheit einer erfindungsgemäßen Partikelkaltschweißvorrichtung,
8. eine Seitenteilschnittansicht einer alternativen Partikelpositioniereinheit einer erfindungsgemäßen Partikelkaltschweißvorrichtung,
9. eine Seitenteilschnittansicht einer weiteren alternativen Partikelpositioniereinheit einer erfindungsgemäßen Partikelkaltschweißvorrichtung,
10. eine Seitenteilschnittansicht einer Ausführungsform einer erfindungsgemäßen Partikelkaltschweißvorrichtung.

Das erfindungsgemäße Partikelkaltschweißverfahren (nachfolgend auch PKS-Verfahren genannt) ermöglicht das Verschweißen gleichartiger und unterschiedlicher Metallsorten ohne äußere Wärmezufuhr. Die so gefügten Bauteile sind aufgrund des nicht erfolgten Wärmeeintrags spannungsfrei und infolgedessen maßhaltig.

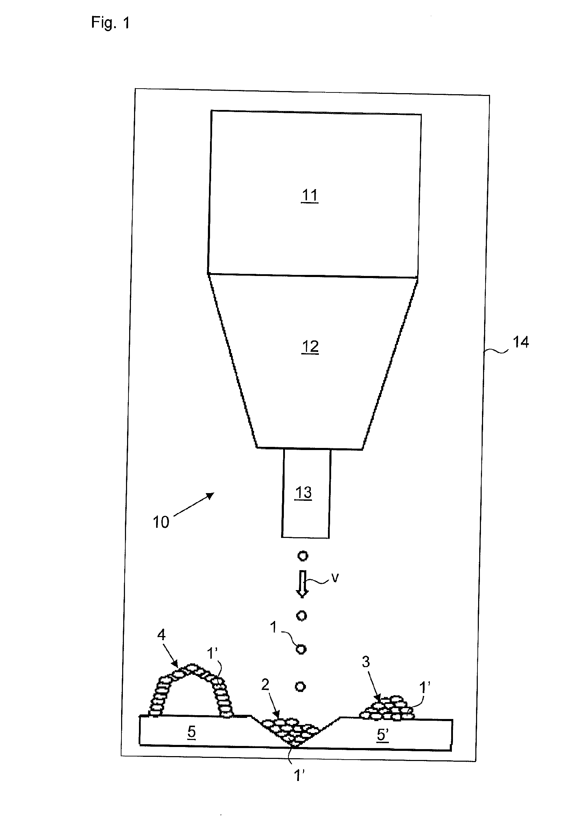

Beim erfindungsgemäßen Partikelkaltschweißverfahren werden Metallpartikel auf mehr als 100 m/s beschleunigt, ehe sie auf eine metallische Schweißstelle aufprallen, wo die Oberflächenatome der Partikel und des Metallsubstrats auf Atomabstand zusammengepresst werden und eine metallische Bindung eingehen. Die Metallpartikel werden so ohne äußere Wärmezufuhr an der Schweißstelle stoffschlüssig mit dem Substrat verbunden. Unter metallischem Substrat wird vorliegend der nicht beschleunigte Schweißpartner verstanden. Abhängig vom Verwendungszweck des erfindungsgemäßen PKS-Verfahrens kann das metallische Substrat, wie auch aus Fig. 1 ersichtlich wird, z. B. bei der generativen Herstellung einer Metallstruktur 4 ein zuvor abgeschiedener Metallpartikel 1' sein. Wird das PKS-Verfahren zum Verbindungs- bzw. Naht- oder Punktschweißen eingesetzt, so besteht das metallische Substrat zum einen aus den zu verbindenden Fügepartnern 5,5', zum anderen aus den zur Bildung der Schweißnaht 2 bereits abgeschiedenen Metallpartikeln 1'. Beim Auftragsschweißen wird durch das erfindungsgemäße PKS-Verfahren aus den abgeschiedenen Metallpartikeln 1' eine Beschichtung 3 auf dem Fügepartner 5' hergestellt. Hierbei treffen lediglich die Partikeln der untersten Partikelschicht direkt auf die Oberfläche des Fügepartners 5', die weiteren Partikelschichten der Beschichtung 3 prallen auf bereits abgeschiedene Partikeln 1'.

Prinzipiell umfasst eine zur Durchführung des PKS-Verfahrens geeignete Kaltschweißvorrichtung 10 wie in Fig. 1 gezeigt, eine Partikelzuführeinheit 11, die die metallischen Partikel 1 einer Partikelbeschleunigungseinheit 12 zuführt, die die Metallpartikel auf die erforderliche Aufprallgeschwindigkeit v beschleunigt, vorliegend auf zumindest 100 m/s, um das Kaltverschweißen mit dem Metallsubstrat 1',5,5' zu ermöglichen. Zum Ausrichten der Schweißpartikel 1 und entsprechend gerichteten Aufbringen derselben schließt sich an die Partikelbeschleunigungseinheit 12 eine Partikelpositioniereinheit 13 an, um die gewünschte Metallstruktur 4, Schweißnaht 2 oder Auftragsschicht 3 zu bilden.

Zusätzlich kann die gesamte Kaltschweißvorrichtung 10 aus Partikelzuführeinheit 11, Partikelbeschleunigungseinheit 12 und Partikelpositioniereinheit 13 positionierbar ausgeführt sein und so etwa entlang eines Fügespalts bewegt werden, um eine Schweißnaht zu bilden.

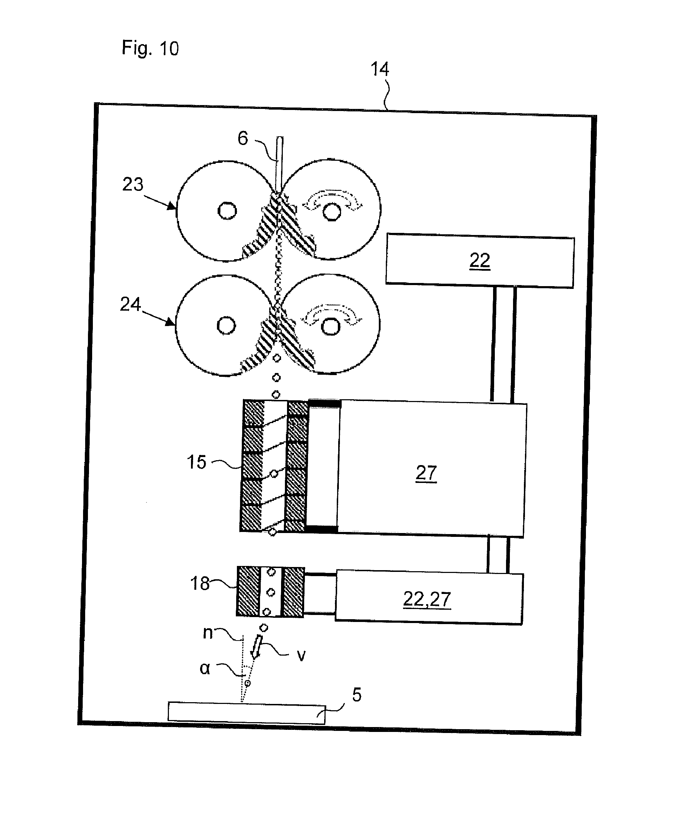

Neben der ausreichenden kinetischen Energie beim Aufprall, die durch eine Partikelgeschwindigkeit von über 100 m/s bereitgestellt wird, ist für die Herstellung der kalten mechanischen Schweißverbindungen ferner der Aufprallwinkel der Partikel auf das Substrat wichtig. Die Bildung einer charakteristischen wellenförmigen Grenzlinie zwischen den Schweißpartnern durch die plastische Verformung beim Aufprall tritt bei einem Kollisionswinkel auf, der zwischen 3° und 30° liegt. Der Kollisionswinkel ist der Winkel, der zwischen dem Bewegungsvektor v der Metallpartikel 1 und dem Normalenvektor n des Metallsubstrats 1',5,5' aufgespannt wird (siehe Fig. 10).

Optional kann die Kaltschweißvorrichtung 10 in einer Vakuumkabine 14 angeordnet sein, wodurch der Luftwiderstand entfällt, der die Metallpartikel bremst. Ferner wird die Schweißqualität verbessert, da keine Luftverdrängung beim Aufprall stattfindet.

In einem Schweißprozess können bevorzugt bezüglich Größe und Form einheitliche Metallpartikel eingesetzt werden, um ein homogenes Schweißergebnis zu erzielen.

Für verschiedene Schweißaufgaben kann es sinnvoll sein, Partikelgröße und Partikelgeometrie zu variieren. Geeignete Partikelgeometrien umfassen regelmäßige Formen wie beispielsweise Kugel, Zylinder, Quader oder auch unregelmäßig geformte Partikel wie Pulver. Mögliche Partikelgrößen liegen in einem Bereich von 0,5 mm bis 3 mm. Die optimalen Partikelgeometrien und Partikelgrößen können je nach Aufgabe variieren. Es können auch Nanopartikel zum Einsatz kommen.

Das erfindungsgemäße Kaltschweißverfahren ermöglicht ebenso wie das Schockschweißen, etwa beim Magnetimpulsschweißen, eine Vielzahl an Materialpaarungen, wobei zwischen den Schweißpartnern eine stoffschlüssige Verbindung ohne Gefügeveränderungen oder Einschlüsse in der Nähe der Schweißzone entsteht.

Eine Auswahl solcher Materialpaarungen ist in der nachfolgenden Tabelle 1 aufgelistet. Sowohl Aluminium als auch Kupfer lassen sich so mit Aluminium, Kupfer, Messing, Magnesium, Stahl, Nickel und Titan verschweißen. Messing, Magnesium, Stahl, Nickel und Titan lassen sich jeweils mit sich selbst, sowie mit Aluminium und Kupfer verschweißen.

Tabelle 1: Die beim Kaltverschweißen möglichen Materialpaarungen (x).

**Tabelle 1**

| | Aluminium | Kupfer | Messing | Magnesium | Stahl | Nickel | Titan |
|---|---|---|---|---|---|---|---|
| Aluminium | x | x | x | x | x | x | x |
| Kupfer | x | x | x | x | x | x | x |
| Messing | x | x | x | | | | |
| Magnesium | x | x | | x | | | |
| Stahl | x | x | | | x | | |
| Nickel | x | x | | | | x | x |

(E. Uhlmann, K. Damavandi, A. Rautenstrauch: "Hochdynamischer Aufprallvorgang beim Magnetimpulsschweißen", GKSS 2006/15, Geesthachter Schweißtage '06 - Festphase-Fügeverfahren, S. 23 - 33)

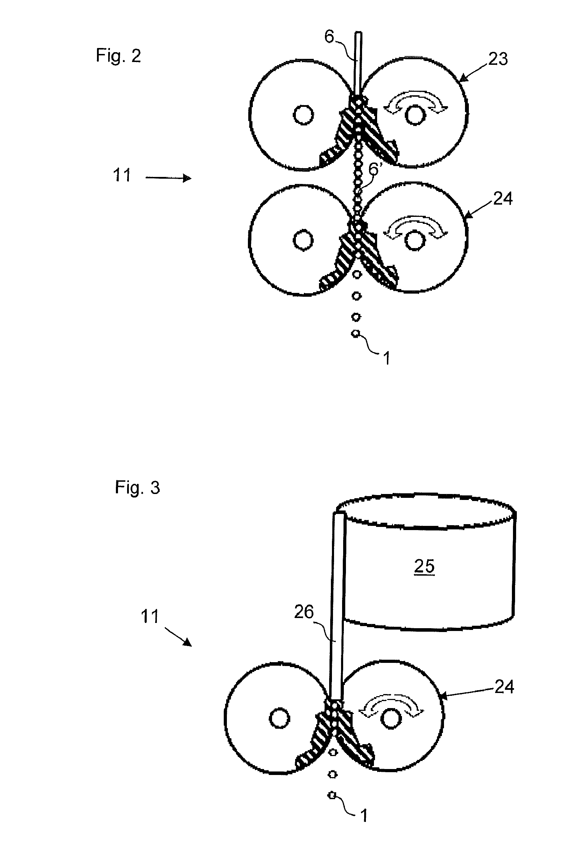

Für eine hohe Schweißgeschwindigkeit, ähnlich dem Laserschweißen, vor allem aber auch für den Einsatz bei der generativen Herstellung von Metallstrukturen und Bauteilen, liegt die Zuführfrequenz der Partikelzuführeinheit 11, für die zwei Ausführungsbeispiele in Fig. 2 und Fig. 3 aufgeführt sind, bei mindestens 100 Partikeln pro Sekunde.

Fig. 2 zeigt eine Partikelzuführeinheit 11, die eine integrierte Form- und Vereinzelungseinrichtung umfasst. Die Formeinrichtung 23 dient zum Kaltumformen eines Metalldrahts 6 zu einer Partikelkette 6', die dann in der nachgeordneten Vereinzelungseinheit 24 zu den Partikeln 1 getrennt wird. Die so vereinzelten Partikel 1 werden der Partikelbeschleunigungseinheit zugeführt. Die Formeinrichtung 23 besteht vorliegend aus einem Walzenpaar 23, das gleichzeitig eine Vorschubeinrichtung für den Metalldraht 6 darstellt. Die Umformung des Metalldrahts 6 erfolgt zwischen den Walzen 23 durch deren profilierte Mantelflächen. Das Profil in den Mantelflächen bestimmt die Partikelform der aus dem Draht 6 geformten Partikel 1. Als Vereinzelungseinrichtung dient hier ein zweites Walzenpaar 24, das der Formeinrichtung 23 nachgeordnet ist und koordiniert zum ersten Walzenpaar 23 rotiert. Auch die Mantelflächen des zweiten Walzenpaars 24 sind profiliert, diesmal, um die Partikel 1 aus der Partikelkette 6' abzutrennen.

Fig. 3 zeigt eine alternative Partikelzuführeinheit 11, die vorgefertigte Partikel 1 zuführt. Die Partikel 1 werden unabhängig vom Schweißprozess hergestellt. Daher ist in dieser Ausführungsform ein breiteres Spektrum bezüglich Partikelgröße und Form und Qualität anwendbar. Es können hochwertige Metallpartikel eingesetzt werden. Auf der anderen Seite ist eine gleichmäßige, stabile Zufuhr der so als Schüttung oder Pulver vorliegenden Metallpartikel zur Vereinzelung erforderlich. Dazu wird vorliegend ein Rüttler 25 eingesetzt, der die Partikel 1 in eine Förderleitung 26 fördert, die zu einer Vereinzelungseinrichtung 24 führt. Der Querschnitt der Förderleitung 26 entspricht in etwa einer Maximalabmessung eines Partikels, so dass in der Förderleitung 26 die Partikel hintereinander in einer Reihe transportiert werden und zur Vereinzelungseinrichtung 24 gebracht werden. Auch diese Vereinzelungseinrichtung 24 wird durch ein Paar aus Walzen 24 mit profilierten Mantelflächen gebildet, wodurch die Partikel 1 mit einem von der Rotationsgeschwindigkeit der Walzen 24 abhängigen Abstand der Partikelbeschleunigungseinheit zugeführt werden.

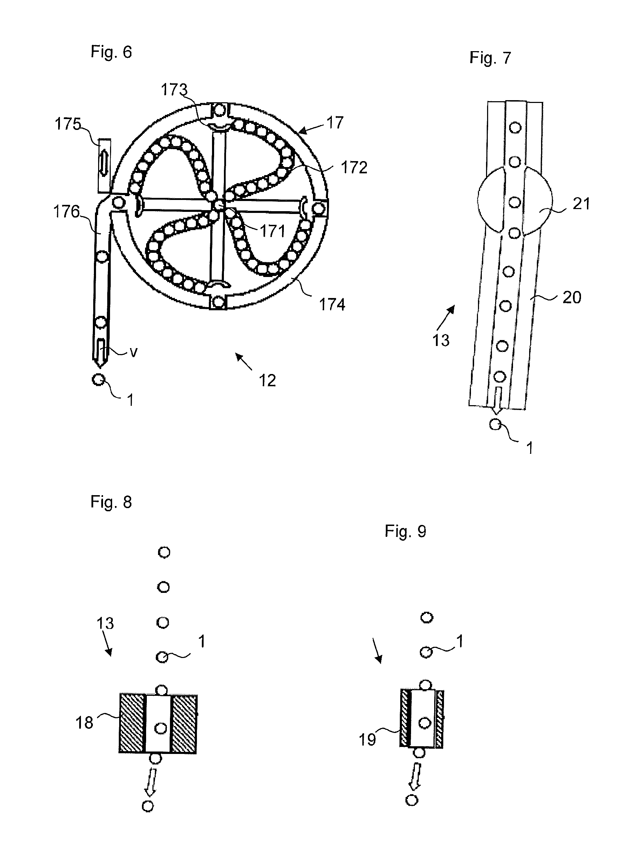

Die Umsetzung der Partikelbeschleunigungseinheit 12 kann durch einen mechanischen Beschleuniger realisiert werden. Hierfür kommt beispielsweise ein Rotationsbeschleuniger 17, wie er in Fig. 6 dargestellt ist, in Frage. Aus der axialen Partikelzuführung 171 werden die Metallpartikel 1 in die hier vier Partikelkanäle 172 verteilt, an deren Ende jeweils ein gesteuerter Vereinzier 173 vorliegt, durch den jeweils ein Partikel 1 in die Rotationseinheit 174 gelangt. Von dort treten die Partikel 1 nach Öffnen eines Schiebers 175 durch den Abschusskanal 176 mit der Geschwindigkeit v aus. Vorteilhaft sind derartige mechanische Partikelbeschleuniger 12 technisch preiswert und einfach. Zudem haben sie einen geringen Energieverbrauch und Platzbedarf. Allerdings besteht ein gewisses Fehlerpotential durch die vielen störanfälligen mechanischen Teile sowie die durch Abrieb entstehende Verschmutzung. Ferner bedingt der Abrieb einen gewissen Verschleiß. Die Ansteuerung des Rotationsbeschleunigers 17 über die Drehzahl ist zudem relativ träge.

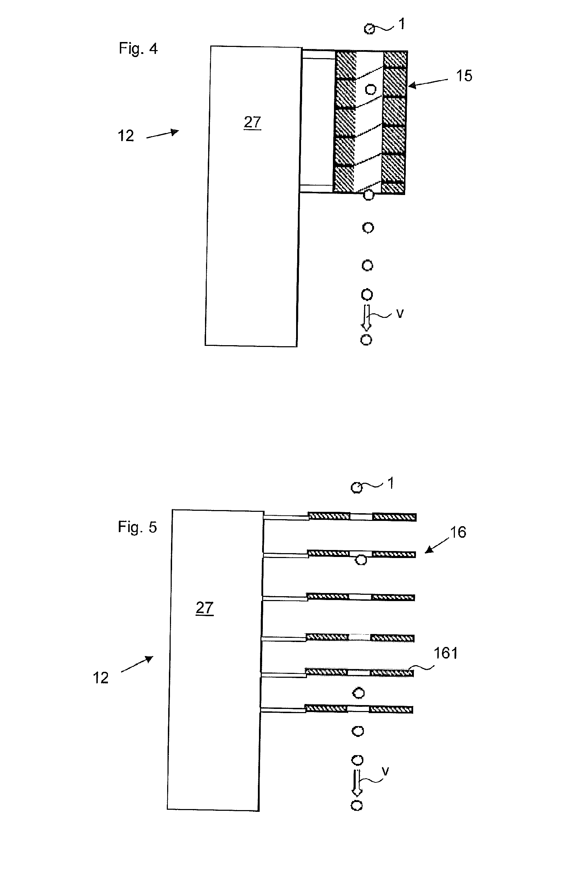

In Fig. 4 ist als Partikelbeschleunigungseinheit 12 ein Hochfrequenz-Induktionspulsbeschleuniger skizziert. Die Spule 15 wird von einem Spannungsgenerator 27 versorgt. Die elektrisch leitfähigen Metallpartikel 1 werden durch die Kraftwirkung eines gepulsten, sich zeitlich ändernden Magnetfelds ohne mechanischen Kontakt beschleunigt. Das Impulsmagnetfeld induziert im Partikel 1 einen Wirbelstrom, durch den zeitgleich ein zweites Magnetfeld entsteht, das dem ersten entgegengerichtet ist. Die dabei entstehenden magnetischen Drücke beschleunigen den Partikel 1 auf eine Geschwindigkeit v von mehr als 100 m/s.

Da zwischen Induktionspulsbeschleuniger 15 und den Partikeln 1 kein mechanischer Kontakt stattfindet, kommt es hier zu keinem Verschleiß. Ferner ist eine schnelle Ansteuerung gegeben, und die Beschleunigungseinheit kann flexibel für unterschiedliche Partikelgeometrien eingesetzt werden. Allerdings ist der Strombedarf höher als bei der mechanischen Lösung; auch zeigt die Stromversorgung einen höheren Platzbedarf.

Entsprechendes gilt für den ebenfalls berührungslos arbeitenden kapazitiven Beschleuniger 12, der in Fig. 5 dargestellt ist und eine Kondensatorkaskade 16 Kondensatoren aufweist, die von einem Spannungsgenerator 27 versorgt werden. Die Kondensatorplatten 161 weisen eine Durchtrittsöffnung für die Partikel 1 auf, die durch die zwischen den Kondensatorplatten aufgebauten wechselnden elektrischen Felder beschleunigt werden.

Zur Ausrichtung der Partikel auf die Schweißstelle unter einem Aufprallwinkel zwischen 2° und 30° schließt sich an die Partikelbeschleunigungseinheit eine Partikelpositioniereinheit 13 an. Auch hierfür bestehen mechanische, induktive und kapazitive Lösungen. Die preiswerte und technisch einfache mechanische Partikelstrahllenkung ist in Fig. 7 gezeigt. Die Ablenkhülse 20 ist durch ein Kardangelenk 21 durch ein zwei-Achsensystem senkrecht zur Bewegungsrichtung der Partikel beweglich und positionierbar. Durch die Führung der Partikel 1 in der Hülse 20 kann es allerdings zu einem Geschwindigkeitsverlust durch Reibung kommen, die überdies zu einer Veränderung des Partikelabstands führen kann.

Eine genauere Positionierung kann durch induktive oder kapazitive Partikelstrahllenkung, dargestellt in Fig. 8 durch eine Ablenkspule 18 und in Fig. 9 durch einen Ablenkkondensator 19, erreicht werden, die überdies weniger störanfällig, allerdings etwas aufwändiger bezüglich der Steuerelektronik ist. Aufgrund der berührungslosen Ablenkung liegt auch hier weniger Verschleiß vor. Ferner ist eine schnelle Ansteuerung gegeben, und die induktive oder kapazitive Ablenkeinheit kann flexibel für unterschiedliche Partikelgeometrien eingesetzt werden.

Fig. 10 zeigt beispielhaft eine Ausführungsform einer erfindungsgemäßen Partikelkaltschweißvorrichtung, die als Partikelzuführeinheit die kombinierte Umform- und Vereinzelungseinrichtung aus den zwei Walzenpaaren 23,24 aufweist, die eine Partikelkaltumformung aus Draht 6 vollziehen. Mit dieser stabil und gleichmäßig arbeitenden Umform- und Vereinzelungseinrichtung kann eine Auftragsleistung von mindestens 100 zugeführten Partikeln pro Sekunde erzielt werden.

Als Partikelbeschleunigungseinheit ist ein Induktionspulsbeschleuniger aus einer von einem Spannungsgenerator 27 versorgten Spule 15 dargestellt, die eine berührungslose Beschleunigung mit hoher Beschleunigungsleistung bereitstellt und variable Partikelgeometrien gestattet. Auch die Partikelpositionierung erfolgt induktiv mit einer hochpräzisen und hochdynamisch arbeitenden Ablenkspule 18, so dass auch hier Partikel verschiedener Partikelgeometrien abgelenkt werden können. Mittels Steuerelektroniken 22 und Spannungsversorgung 23 können Partikelzufuhr, Partikelbeschleunigung und Partikelablenkung abgestimmt werden, so dass jeder Partikel 1 an der vorgesehenen Schweißstelle auf dem Substrat 5 mit dem vorgesehenen Kollisionswinkel α auftrifft. Die Durchführung des Kaltverschweißens in einer Vakuumkabine 14 verringert den Luftwiderstand, so dass die beschleunigten Partikel 1 nicht abgebremst werden.

Auswirkungen des Luftwiderstandes können ebenfalls durch eine hohe Partikelfrequenz und/oder Partikelgeschwindigkeit minimiert werden. Dabei bildet sich im Überschallbereich ein lokales Vakuum im Partikelstrahl, da die Luftmoleküle aufgrund ihrer geringeren Eigengeschwindigkeit den Raum zwischen den Partikeln nicht mehr besetzen können.

Mit dem erfindungsgemäßen PKS-Verfahren wird das spannungsfreie Verschweißen gleicher und unterschiedlicher Metalle sowie das Verschweißen hochlegierter und hochfester Metalle ohne Gefügeveränderung ermöglicht. Durch das Ausrichten des Metallpartikelstrahls auf eine Verbindungsstelle ist die Kaltverschweißung von Bauteilen analog dem Verbindungsschweißen mit einer Schweißnaht möglich. Dabei können die Nachteile der Schmelzschweißverfahren in Bezug auf Wärmespannungen, Geometrie- und Gefügeveränderungen vermieden werden.

Ferner können Bimetalle und elektronische Bauelemente hergestellt werden, da durch das mechanische PKS-Verfahren unterschiedliche Metalle stoffschlüssig durch metallische Bindung gefügt werden.

Durch den Einsatz von Nanopartikeln können weiterhin auf elektronische Bauelemente wie zum Beispiel Leiterplatten extrem dünne Leiterbahnen aufgetragen werden. Der aufwändige und umweltschädliche Ätz- und Galvanisierprozess kann entfallen.

Durch die Partikelstrahllenkung können höchste Schweißgeschwindigkeiten, ähnlich den Geschwindigkeiten beim Laserstrahlschweißen erreicht werden. Ferner gestattet das PKS-Verfahren höchste Auftragsleistungen, da beim Verschweißen weder eine Aufschmelzzeit noch eine Abkühlzeit auftritt.

Dadurch eignet sich das PKS-Verfahren für das spannungsfreie Verschweißen von Karosserieteilen unterschiedlicher und gleichartiger Metalle im Automobilbau sowie generell zum spannungsfreien Verschweißen von Bauteilen im Maschinen-, und Anlagenbau. Es können unterschiedlichste Bleche für Anlagen in der Verfahrens- und Lebensmitteltechnik plattiert werden.

Das erfindungsgemäße PKS-Verfahren eignet sich nicht nur zum Nahtschweißen und Auftragsschweißen, sondern durch die Verwendung eines lenkbaren Partikelstrahls besonders auch zum Einsatz in 3 D-Metallplottern, da es höchste Auftragsleistungen ermöglicht und im Fügeverbund aus den kalt verschweißten Metallpartikeln keine Wärmespannungen auftreten.

Somit lassen sich Prototypen und Serienteile mit dem erfindungsgemäßen PKS-Verfahren aus dem Originalwerkstoff generativ herstellen (3D-Plotten).

Generative Herstellungsanlagen, auch 3D-Plotter genannt, werden vor allem zur Darstellung von Prototypen oder Bauteilen eingesetzt, die Hohlräume aufweisen. Vor allem im Kraftfahrzeugbau bergen Strukturbauteile mit Hohlräumen großes Leichtbaupotential, da so beanspruchungsgerechte Materialstrukturen beispielsweise aus der Strukturbionik geschaffen werden können, die ein optimales Verhältnis von Masse zu Festigkeit und ferner ein hohes Dämpfungsvermögen erreichen können.

Ein bekanntes, für Metalle einsetzbares generatives Verfahren ist das selektive Lasersintern. Lasersintern ist ein Verfahren, bei dem eine niedrigschmelzende Partikelkomponente eines pulverförmigen Materials durch eine mittels der Laserenergie erzeugten Temperaturerhöhung aufgeschmolzen wird und eine hochschmelzende Partikelkomponente des Pulvers umschließt, so dass das Pulver an den gelaserten Stellen versintert wird.

Beim 3D-Laserauftragsschweißen, einem formgebenden Auftragsschweißen, wird der pulverförmige Auftragswerkstoff vollständig in die schmelzflüssige Phase überführt, indem der Zusatzwerkstoff dem Laserstrahl zugeführt und von diesem aufgeschmolzen wird. Beim Auftreffen des geschmolzenen Zusatzwerkstoffs auf das Bauteil erstarrt die Schmelze durch Wärmeableitung in das Bauteil. Auch beim Liquid Metal Jet Printing wird ein metallisches Bauteil schichtweise durch Schmelzetröpfchen einer niedrigschmelzenden Metalllegierung aufgebaut.

So verwenden alle bislang bekannten generativen Herstellungsverfahren von metallischen Bauteilen eine schmelzflüssige Phase zum Verschweißen der Partikel, die die schon genannten Nachteile der Wärmespannungen, Geometrieveränderungen und Gefügeänderungen mit sich bringen.

Mit dem erfindungsgemäßen PKS-Verfahren hingegen können Metallstrukturen generativ hergestellt werden, ohne dass die Metallpartikel aufgeschmolzen werden. Da so die Aufschmelz- und Erstarrungszeiten entfallen, kann aus den Metallpartikeln mit dem PKS-Verfahren eine Metallstruktur sehr schnell aufgebaut werden. Die kalte Schweißverbindung entsteht unmittelbar beim Aufprall auf den oder die zuvor abgeschiedenen Metallpartikel. Schichtweise können so auch komplexe Hohlraumstrukturen, die auch unregelmäßig aus der Strukturbionik entnommen sein können, erstellt und damit Bauteile geschaffen werden, die gleichzeitig dem Leichtbau und den mechanischen Anforderungen im höchsten Maße Rechnung tragen.

## Patentansprüche

1. Kaltschweißverfahren zum Verbinden metallischer Schweißpartner, umfassend die Schritte:
- Bereitstellen von Metallpartikeln (1) als erste Schweißpartner durch eine Partikelzuführeinheit (11),
- Beschleunigen der Metallpartikel (1) auf eine Geschwindigkeit von zumindest 100 m/s durch eine Partikelbeschleunigungseinheit (12),
- Ausrichten jedes der beschleunigten Metallpartikel (1) durch eine Partikelpositioniereinheit (13) auf eine Schweißstelle an zumindest einem Metallsubstrat (1',5,5'), das einen zweiten Schweißpartner bildet,
- auftreffen Lassen der auf zumindest 100 m/s beschleunigten Metallpartikel (1) auf der Schweißstelle an dem Metallsubstrat (1',5,5'), dabei Zusammenbringen der Oberflächenatome der Metallpartikel (1) und der Oberflächenatome des Metallsubstrats (1',5,5') auf Atomabstand und unter Bilden einer metallischen Bindung Verbinden des an der Schweißstelle aufgetroffenen Metallpartikels (1') mit dem Metallsubstrat (1',5,5'),
**dadurch gekennzeichnet,**
**dass** dieses Kaltschweißverfahren verwendet wird
zum generativen Herstellen einer zumindest einen Hohlraum aufweisenden Metallstruktur (4),
wobei erste auf eine Abformgrundlage aufgetroffene Metallpartikel (1') das Metallsubstrat (1') für die nachfolgend auftreffenden Metallpartikel (1) bilden.

2. Kaltschweißverfahren nach Anspruch 1,
wobei das Bereitstellen der Metallpartikel (1) durch die Partikelzuführeinheit (11) die Schritte umfasst:
- Vereinzeln der Metallpartikel (1) und sukzessive Zuführen zu der Partikelbeschleunigungseinheit (12),
wobei das Vereinzeln bevorzugt durch Formen, bevorzugt durch Kaltformen und Trennen eines Metalldrahts (6) während einer Zufuhr des Metalldrahts (6) erfolgt, wobei die Partikelgröße der gebildeten Metallpartikel (1) bezüglich zumindest einer Abmessung einer Stärke des Metalldrahts (6) entspricht.

3. Kaltschweißverfahren nach Anspruch 1 oder 2,
wobei das Beschleunigen der Metallpartikel (1) durch die Partikelbeschleunigungseinheit (12) und/oder das Ausrichten jedes der beschleunigten Metallpartikel (1) auf eine Schweißstelle durch die Partikelpositioniereinheit (13) induktiv, kapazitiv oder mechanisch erfolgt.

4. Kaltschweißverfahren nach zumindest einem der Ansprüche 1 bis 3, umfassend die Schritte:
- Steuern des Schweißergebnisses durch Einstellen von Schweißparametern, umfassend:
- Einstellen eines Aufprallwinkels der Metallpartikel (1) auf einen Wert in einem Bereich von 1° bis 40°, bevorzugt von 3° bis 30°, in Bezug zu einem Normalenvektor des Metallsubstrats (1',5,5'), und/oder
- Einstellen der Geschwindigkeit, auf die die Metallpartikel (1) beschleunigt werden, und/oder
- Einstellen des Verhältnisses von Partikelmasse zu Partikelaufpralloberfläche, und/oder
- Wählen einer Partikelgeometrie, umfassend Kugeln, Zylinder, Quader, Pulver, und/oder einer Partikelgröße, die vorzugsweise in einem Bereich von 0,1 bis 5 mm, besonders bevorzugt von 0,5 bis 3 mm liegt, und/oder
- Einstellen einer Partikelzuführfrequenz auf zumindest 80 Partikel/s, bevorzugt auf zumindest 100 Partikel/s, und/oder
- Vorwärmen der Metallpartikel (1) und/oder des Metallsubstrats (1',5,5'), und/oder
- Anlegen eines Vakuums.

5. Kaltschweißvorrichtung (10), geeignet zur Durchführung eines Kaltschweißverfahrens nach zumindest einem der Ansprüche 1 bis 4, **dadurch gekennzeichnet, dass**
die Kaltschweißvorrichtung (10)
- eine Partikelzuführeinheit (11),
- eine der Partikelzuführeinheit (11) nachgeordnete Partikelbeschleunigungseinheit (12) zum Beschleunigen der von der Partikelzuführeinheit (11) zugeführten Metallpartikel (1),
- eine der Partikelbeschleunigungseinheit (12) nachgeordnete Partikelpositioniereinheit (13), die auf eine Schweißstelle an zumindest einem Metallsubstrat (1',5,5') ausrichtbar ist, und
- eine Haltevorrichtung für das zumindest eine Metallsubstrat (1',5,5') aufweist
**dadurch gekennzeichnet,**
**dass** die Partikelzuführeinheit (11)
- eine Form- und Vereinzelungseinrichtung zum Formen eines Metalldrahts (6) und Vereinzeln zu den Metallpartikeln (1) umfasst.

6. Kaltschweißvorrichtung (10) nach Anspruch 5,
**dadurch gekennzeichnet, dass**
die Kaltschweißvorrichtung (10)
- in einer Vakuumkabine (14) angeordnet ist, und/oder
- zumindest eine Steuerelektronik (22) umfasst, die mit der Partikelzuführeinheit (11) und/oder der Partikelbeschleunigungseinheit (12) und/oder der Partikelpositioniereinheit (13) gekoppelt ist.

7. Kaltschweißvorrichtung (10) nach Anspruch 5 oder 6,
**dadurch gekennzeichnet, dass**
in der Form- und Vereinzelungseinrichtung zum Formen eines Metalldrahts (6) und Vereinzeln zu den Metallpartikeln (1) zumindest ein Walzenpaar (23) eine Vorschubeinrichtung für den Metalldraht (6) bildet und profilierte Mantelflächen der Walzen (23) die Formeinrichtung und ein nachgeordnetes, koordiniert mit dem ersten Walzenpaar (23) rotierendes zweites Walzenpaar (24) mit profilierten Mantelflächen die Vereinzelungseinrichtung bereitstellen.

8. Kaltschweißvorrichtung nach zumindest einem der Ansprüche 5 bis 7,
**dadurch gekennzeichnet, dass**
die Partikelbeschleunigungseinheit (12)
- einen Hochfrequenz-Induktionspulsbeschleuniger (15), oder
- einen Linearmotor (15)
- eine Kondensatorkaskade (16), oder
- einen Rotationsbeschleuniger (17)
aufweist.

9. Kaltschweißvorrichtung nach zumindest einem der Ansprüche 5 bis 8,
**dadurch gekennzeichnet, dass**
die Partikelpositioniereinheit (13)
- zumindest eine Ablenkspule (18), oder
- zumindest einen Ablenkkondensator (19), oder
- zumindest eine in zwei Achsen quer zur Partikelbewegung bewegliche, bevorzugt durch ein Kardangelenk (21) bewegliche Ablenkhülse (20) aufweist.
